# EUROPÄISCHE PATENTSCHRIFT

(11) **EP 2 280 199 B1**
(45) Veröffentlichungstag und Bekanntmachung des Hinweises auf die Patenterteilung: **13.07.2016**
(21) Anmeldenummer: 10007741.1
(22) Anmeldetag: 26.07.2010
(51) Int. Cl.: F16J 15/08, C21D 9/00, C21D 1/18, B21D 53/20, C21D 9/46

(54) **Zylinderkopfdichtung, sowie Verfahren zur Herstellung einer Zylinderkopfdichtungsfunktionslage**
Cyclinder head gasket, and process for manufacturing a functional layer of a cylinder head gasket.
Joint de culasse et procédé de fabrication d'une couche fonctionelle d'un joint de culasse

(30) Priorität: 31.07.2009 DE 102009037116; 25.11.2009 DE 102009047115
(43) Veröffentlichungstag der Anmeldung: 02.02.2011
(73) Patentinhaber: ElringKlinger AG, 72581 Dettingen (DE)
(72) Erfinder: Werner, Hans-Peter, Dr., 70794 Filderstadt (DE); Schenk, Peter, 72521 Hohenstein (DE); Heller, Jörg, Dr., 51766 Engelskirchen (DE); Oberhauser, Simon, 85296 Rohrbach (DE)
(74) Vertreter: Hoeger, Stellrecht & Partner Patentanwälte mbB

(56) Entgegenhaltungen:
- WO-A1-2008/150056
- JP-A- H08 302 428

## Beschreibung

Die Erfindung betrifft eine Zylinderkopfdichtung mit mindestens einer Federstahlblech-Funktionslage, welche mindestens eine geprägte Abdichtsicke aufweist und deren Stahl ein niederlegierter Stahl ist und einen C-Gehalt von mindestens 0,4 Gew.%, eine Zugfestigkeit (Rₘ) von mehr als 1.100 N/mm² sowie eine Bruchdehnung (A₈₀ₘₘ) bei einer Anfangsmesslänge von 80 mm von mehr als 2 % und insbesondere von mehr als 3 % aufweist.

In diesem Zusammenhang sei zunächst darauf hingewiesen, dass unter der Zugfestigkeit Rₘ und der Bruchdehnung A₈₀ₘₘ die in der europäischen Norm EN 10002, Teil 1, definierten und nach dieser Norm zu bestimmenden Eigenschaften zu verstehen sind.

Für im Betrieb dynamisch belastete und bereichsweise reversibel verformte Dichtungsplatten und Blechlagen mehrlagiger Dichtungsplatten von Flachdichtungen werden üblicherweise hochlegierte Federstahlbleche aus Stählen mit den Werkstoffnummern 1.4310 und 1.4372 verwendet; bei diesen Stählen handelt es sich um rostfreie, im Wesentlichen austenitische Stähle mit einem Nickelgehalt von 6 bis 7,5 Gew.% bzw. 3,5 bis 4,5 Gew.% und einem Chromgehalt von 16 bis 19 Gew.%, welche wegen dieser Legierungsbestandteile verhältnismäßig teuer sind; außerdem enthalten die Stähle 1.4310 und 1.4372 sogenannten metastabilen Austenit, der beim Umformen zur Bildung von Martensit neigt, was mit einer Verfestigung des Stahls einhergeht und dessen Verarbeitbarkeit erschwert. Bandmaterial aus diesen Stählen weist typischerweise eine Zugfestigkeit (Rₘ) im Bereich von 1.300 bis 1.500 N/mm² auf, ist aber dennoch an sich ausreichend dehnbar, um der Abdichtung und/oder Abstützung von Maschinen- bzw. Motorbauteilen dienende Verformungen wie Sicken und dergleichen in das Blech einprägen zu können, was bei diesen Stählen im Falle einer Einstellung einer deutlich höheren Festigkeit des Stahls nicht mehr der Fall wäre.

Aus der DE-101 56 603-A1 ergibt sich eine Dichtungsplatte oder -lage aus einem Federstahlblech, bei dessen Stahl es sich um einen niederlegierten und deshalb weit billigeren Kohlenstoffstahl mit einem C-Gehalt von mindestens 0,4 Gew.% und insbesondere von 0,65 bis 0,73 Gew.% handelt. Bei der Herstellung dieser Dichtungsplatte oder -lage wird von einem Bandmaterial ausgegangen, welches in mehreren Schritten, bestehend aus Kaltwalzen und anschließendem Zwischenglühen, auf die gewünschte Dicke gebracht wurde, worauf die gewünschten mechanischen Eigenschaften in einem Vergütungsprozess eingestellt wurden, bei dem dem Stahl zunächst bei einer Temperatur von ungefähr 900°C ein austenitisches Gefüge gegeben, der Stahl dann abgeschreckt und abgekühlt (gehärtet) sowie dann bei einer Temperatur von ungefähr 500 °C angelassen wurde, wobei durch diesen Vergütungsprozess der Stahl ein im Wesentlichen martensitisches Gefüge erhielt. Das so erhaltene Federstahlblech weist eine Zugfestigkeit (Rₘ) von ungefähr 1.500 N/mm² und eine Bruchdehnung (A₈₀ₘₘ) bei einer Anfangsmesslänge von 80 mm von ungefähr 4 % bis ungefähr 5 % auf. In dieses Federstahlblech lassen sich z.B. Sicken ohne weiteres einprägen, wobei die Festigkeit des Materials durch eine auf den Prägevorgang folgende zusätzliche Wärmebehandlung noch erhöht werden kann.

Der vorstehend beschriebene Vergütungsprozess ist jedoch ein langsames und damit auch teueres Behandlungsverfahren. Als für die Dichtungstechnik nachteilig wird auch die sich durch diesen Vergütungsprozess ergebende Oberflächenqualität des Stahlblechs empfunden: Wird nicht unter Inertgas gehärtet, muss die Blechoberfläche anschließend mechanisch gereinigt werden, wodurch Kratzer und Riefen an der Blechoberfläche entstehen können, welche sich insbesondere im Bereich von im Betrieb dynamisch belasteten Sicken und anderen Prägestrukturen nachteilig auf die Dauerhaltbarkeit der Dichtungsplatte oder -lage auswirken können; wird unter Inertgas gehärtet, kann zwar eine mechanische Reinigung entfallen, da das Blechband jedoch mittels Walzen durch eine für diesen Vergütungsprozess erforderliche Anlage gezogen wird, kann es aufgrund des Vergütungsprozesses Ziehriefen aufweisen, welche sich wiederum negativ auf die Dauerhaltbarkeit von Sicken und anderen Prägestrukturen auswirken.

Auch aus der DE-10 2007 061 084-A1 ergibt sich eine Dichtungsplatte oder -lage aus einem Federstahlblech, bei dessen Stahl es sich um einen niederlegierten Kohlenstoffstahl handelt, welcher jedoch zumindest im Wesentlichen ein bainitisches Gefüge aufweist. Von diesem Stahlblech wird behauptet, dass es sich trotz einer verhältnismäßig geringen Bruchdehnung von zwischen 3 % und 15 % für dauerstandfeste Flachdichtung mit eingeprägten Sicken eignet.

Um das im Wesentlichen bainitische Gefüge des Stahls zu erzielen, wird in einem Vergütungsprozess der Stahl zunächst austenitisiert, worauf er abgeschreckt und auf einer Temperatur oberhalb der sogenannten Martensit-Starttemperatur gehalten wird, wobei Austenit in Bainit umgewandelt wird; dieser Vorgang erfolgt in einem Salz- oder Metallbad. Deshalb gelten auch für diese Technologie die vorstehend im Zusammenhang mit der DE 101 56 603-A1 erwähnten Nachteile.

Schließlich ergibt sich aus der JP H08-302428 A ein für die Herstellung von Federn vorgesehenes und in Streifenform vorliegendes Federstahlblech mit 0,6 bis 1,0 % C und einer Zugfestigkeit zwischen 1.880 und 2.120 n/mm²; der Stahl wurde zur Bildung eines im Wesentlichen perlitischen Gefüges einer Wärmebehandlung in einem Temperaturbereich von 500 bis 550 °C und dann durch Kaltwalzen einer Dickenreduzierung von 70 bis 95 % unterzogen, woraus geschlossen werden könnte, dass der Stahl eine in diesem Dokument nicht offenbarte Bruchdehnung (A₈₀ₘₘ) von mehr als 2 % aufweist.

Der Erfindung lag die Aufgabe zugrunde, eine Zylinderkopfdichtung mit mindestens einer Federstahlblech-Funktionslage vorzuschlagen, deren Stahl ohne hohe Anteile von teueren Legierungselementen, wie z.B. Nickel und/oder Chrom auskommt und deshalb kostengünstig ist, sich aber für Funktionslagen noch besser eignet als die vorstehend erörterten bekannten Kohlenstoffstähle; ferner sollte er die Option bieten, sich unter Vermeidung der vorstehend erwähnten, prozessbedingten Nachteile (teurer Vergütungsprozess und problematische Oberflächenqualität des Blechs) herstellen zu lassen.

Diese Aufgabe lässt sich mit einer Zylinderkopfdichtung gemäß Anspruch 1 lösen.

Vorzugsweise hat der Stahl ein Gefüge mit einem Anteil von mindestens 70 % Perlit, wobei Ausführungsformen bevorzugt werden, bei denen der Stahl ein im Wesentlichen perlitisches Gefüge besitzt. Besonders vorteilhaft ist ein Stahl, bei dem der Perlit mindestens im Wesentlichen ein sorbitisches Gefüge aufweist und vorzugsweise von feinstlamellarem Perlit (auch Troosit genannt) gebildet wird.

Wenn vorstehend von einem prozentualen Anteil von Perlit am Gefüge des verwendeten Stahls die Rede ist, so ist hierunter das Flächenverhältnis von perlitischem zu nicht-perlitischem Gefüge zu verstehen, welches sich z.B. in einer lichtmikroskopischen Aufnahme eines metallographischen Querschliffs durch das Blech ermitteln lässt.

Der nicht-perlitische Teil des Stahls kann von Martensit und/oder Bainit und/oder nicht in lamellarer Form vorliegendem bzw. vorliegenden Ferrit und Eisenkarbiden gebildet werden.

Es wurde überraschenderweise gefunden, dass ein erfindungsgemäß zur Anwendung kommendes Federstahlblech trotz hoher Festigkeit ein gutes Formänderungsvermögen und eine verhältnismäßig große Duktilität aufweist, was bei Zylinderkopfdichtungen von besonderer Bedeutung ist, weil das Blech für eine Funktionslage einer ein- oder mehrlagigen Zylinderkopfdichtung in aller Regel einem oder mehreren Umformprozessen unterzogen werden muss, um Abdichtsicken in das Blech einzuprägen oder andere, der Abstützung von Motorbauteilen dienende Prägestrukturen zu erzeugen. Durch die Gefügestruktur des erfindungsgemäß zum Einsatz kommenden Federstahlblechs werden aber auch Ermüdungseffekte, das Setzen (Verminderung der Bauhöhe) von dichtungsrelevanten Dichtungsstrukturen und die Abnahme der von einer Sicke bei eingebauter Flachdichtung ausgeübten bzw. aufgenommenen Pressungskräfte während des Betriebs der Zylinderkopfdichtung minimiert.

Vorteilhaft ist es, wenn in das Gefüge des Federstahlblechs kugeliger Zementit eingebettet ist, da dann dichtungsrelevante Strukturen des Dichtungsblechs im Betrieb noch weniger zum Setzen neigen; hierfür ist erfindungsgemäß ein Gehalt von ca. 2% bis ca. 7% (Flächenanteil im Querschliff) an kugeligem Zementit ausreichend. Der kugelige Zementit ist vorzugsweise schon in dem als Ausgangsmaterial verwendeten, im weichgeglühten Zustand vorliegenden und sodann in noch zu beschreibender Weise zu behandelnden Stahlblech vorhanden.

Besonders vorteilhafte Ausführungsformen der erfindungsgemäßen Funktionslage zeichnen sich dadurch aus, dass das Blech ein unter Dickenreduzierung um mindestens ungefähr 40 %, insbesondere um mindestens 50 % kaltumgeformtes Blech mit einer Zugfestigkeit (Rₘ) von mindestens 1.500 N/mm² und insbesondere von mindestens 1.700 N/mm² ist, da dann in einem solchen Blech ausgebildete geprägte Strukturen von hoher Festigkeit sind. Durch eine Erhöhung der Zugfestigkeit lassen sich aber vor allem die elastischen Eigenschaften von in das Federstahlblech eingeprägten Sicken optimieren.

Für das Herstellen geprägter Strukturen des Federstahlblechs sind solche Ausführungsformen der erfindungsgemäßen Funktionslage besonders vorteilhaft, welche sich durch eine Bruchdehnung (A₈₀ₘₘ) von mindestens 3 %, insbesondere von mindestens 4,5 % und vorzugsweise von mindestens 5 % auszeichnen. In bzw. an einem solchen Federstahlblech lassen sich Sicken und andere Prägestrukturen besonders gut einprägen, ohne dass ein hohes Risiko für eine Rissbildung in Kauf genommen werden muss.

Ein erfindungsgemäß zur Anwendung kommender Kohlenstoffstahl kann Chrom, jedoch vorzugsweise höchstens bis zu ca. 1,6 Gew.%, und/oder Nickel, jedoch vorzugsweise höchstens bis zu ca. 0,4 Gew.%, enthalten, ohne dass dadurch der Kostenvorteil des niederlegierten Kohlenstoffstahls gegenüber einem hochlegierten Federstahl verloren geht.

Gerade bei in bzw. an Verbrennungsmotoren zum Einsatz kommenden Flachdichtungen spielt eine ausreichende Korrosionsbeständigkeit eine nicht unerhebliche Rolle, z.B. bei Zylinderkopfdichtungen gegenüber den üblichen Kühlflüssigkeiten. Deshalb empfehlen sich Ausführungsformen der erfindungsgemäßen Funktionslage, bei denen diese mindestens in einem Bereich ihrer einen Hauptoberfläche eine Korrosionsschutz-Beschichtung aufweist.

Bei dem Material dieser Korrosionsschutz-Beschichtung kann es sich z.B. um einen Lack oder ein elastomeres Beschichtungsmaterial handeln, dauerhafter und deshalb zu bevorzugen sind jedoch Ausführungsformen, bei denen das Stahlblech im Bereich der Korrosionsschutz-Beschichtung verzinkt ist und/oder eine Phosphatschicht aufweist.

Eine reine Zink-Schicht als Korrosionsschutz-Beschichtung ist vor allem im Kühlmittelbereich eines Verbrennungsmotors mit Nachteilen behaftet, da im Kühlmittel üblicherweise enthaltene Inhibitoren durch das Zink geschädigt werden können und Zink zu voluminösen Ausfällungen im Kühlmittel führen kann. Deshalb sind Ausführungsformen der erfindungsgemäßen Zylinderkopfdichtung zu bevorzugen, bei denen die Korrosionsschutz-Beschichtung eine an die verzinkte Blechlage angrenzende ZnAI-Diffusionsschicht aufweist. Diese ZnAl-Diffusionsschicht lässt sich in einfacher Weise dadurch erzeugen, dass auf die Zinkschicht eine dünne Aluminiumschicht aufgebracht und das beschichtete Blech sodann beispielsweise einer Wärmebehandlung unterzogen wird, in deren Verlauf Zink in die Aluminiumschicht diffundiert; zu bevorzugen ist jedoch eine Vorgehensweise, bei der die Aluminiumschicht aus einem Organoaluminium-Precursor im CVD-Verfahren niedergeschlagen wird, denn letzteres lässt sich bei Temperaturen durchführen, bei denen die erwünschten mechanischen Eigenschaften des Kohlenstoffstahls nicht beeinträchtigt werden, die aber dazu ausreichen, die ZnAl-Diffusionsschicht zu erzeugen, so dass es keiner zusätzlichen Wärmebehandlung bedarf. Das Zink der Zinkschicht führt dann zu einem guten Korrosionsschutz für den Kohlenstoffstahl, insbesondere auch aufgrund der kathodischen Fernwirkung des Zinks, und in Folge der die Zinkschicht überdeckenden ZnAI-Diffusionsschicht kann die Zinkschicht auch unter dem Einfluss einer Kühlmittelflüssigkeit nicht zu den vorstehend geschilderten Problemen führen. Weist die Korrosionsschutz-Beschichtung auf der ZnAl-Diffusionsschicht eine dünne Aluminium-Deckschicht auf, wie dies zu empfehlen ist, werden Ausführungsformen empfohlen, bei denen die Aluminium-Deckschicht einen kleinen Anteil an Magnesium enthält (von bis zu 3 Gew.%), denn eine reine Aluminium-Deckschicht wäre unter dem Einfluss üblicher Kühlmittelflüssigkeiten instabil, ein Nachteil, welcher durch einen geringen Magnesiumanteil vermieden werden kann.

Einen besonderen Vorteil weist eine erfindungsgemäße Funktionslage dann auf, wenn das im Bereich der Korrosionsschutz-Beschichtung verzinkte Stahlblech eine an die Blechlage angrenzende ZnFe-Diffusionsschicht aufweist, durch welche eine außerordentlich gute Haftung der Korrosionsschutz-Beschichtung am Blech bewirkt wird, so dass sich auch in das schon mit der Korrosionsschutz-Beschichtung versehene Blech z.B. Sicken einprägen lassen, ohne dass die Gefahr ein Beeinträchtigung der Haftung der Korrosionsschutz-Beschichtung am Blech gerade in den sensiblen, der Abdichtfunktion dienenden Bereichen der Funktionslage besteht. Erwähnt sei schließlich noch, dass die obigen Ausführungen zur ZnAl-Diffusionsschicht auch für die ZnFe-Diffusionsschicht gelten.

Als besonders wirksamer Korrosionsschutz des Stahlblechs, vor allem gegenüber den üblichen Kühlflüssigkeiten, haben sich auch schichtbildende Phosphatierverfahren erwiesen, durch die auf der Oberfläche des Stahlblechs schwerlösliche Phosphate, wie Zinkphosphat, gebildet werden.

Ein besonders wirksamer Korrosionsschutz der Funktionslage lässt sich erfindungsgemäß auch mit einer Beschichtung aus einem Korrosionsschutzmittel erreichen, welches eine anorganisch-organische Matrix aufweist, in die Metallpigmente, wie Aluminium-, Magnesium- und/oder Zink-Pigmente eingebettet sind. Die Oberflächen dieser Metallpigmente sind zur Passivierung mit Nano-TiO₂ überzogen; durch diese Passivierung kann eine Weißrostbildung wesentlich reduziert werden.

Das Aufbringen einer solchen Schicht kann sowohl im Stückprozess (Batch-Prozess) durch Sprühen oder Tauchen, als auch im Band-Prozess (Coil-Prozess) durch Aufwalzen auf das Blech erfolgen, worauf die Schicht insbesondere bei erhöhten Temperaturen von beispielsweise ca. 130°C oder mehr gehärtet wird.

Der Feststoffanteil dieser Korrosionsschutzschicht beträgt vorzugsweise zwischen 35 und 60 Gew.%, die Schichtdicke beträgt insbesondere ungefähr 3 bis ungefähr 15 µm.

Als für eine Funktionslage besonders geeignet haben sich Stahlbleche erwiesen, bei denen die chemische Zusammensetzung des Stahls derjenigen eines Stahls gemäß der europäischen Norm EN 10132-4 entspricht, so wie dies bei den auch zu bevorzugenden Stählen mit den Kurzbezeichnungen C67S, C75S, C85S und C100S der Fall ist - die in diesen Kurzbezeichnungen enthaltenen Zahlenwerte geben, durch 100 geteilt, den Kohlenstoffgehalt des entsprechenden Stahls in Gew.% an, d.h. dass beispielsweise der auch unter der Werkstoffnummer 1.1269 bekannte Stahl C85S 0,85 Gew.% Kohlenstoff, der auch unter der Werkstoffnummer 1.1274 bekannte Stahl C100S 1,0 Gew.% Kohlenstoff enthält.

Die Erfindung betrifft auch ein Verfahren zur Herstellung einer Funktionslage, deren Stahl ein niederlegierter Kohlenstoffstahl mit einem Kohlenstoffgehalt von mindestens 0,4 Gew.% ist, und wie sich bereits aus den vorstehenden Erläuterungen ergibt, zeichnet sich das erfindungsgemäße Verfahren dadurch aus, dass als Ausgangsmaterial ein in Blechform vorliegender weichgeglühter Stahl verwendet und dieser einer solchen Wärmebehandlung unterzogen wird, dass der Stahl ein Gefüge aufweist, in welchem das Flächenverhältnis von perlitischem zu nicht-perlitischem Gefüge mehr als 0,5 beträgt, und wobei das Blech nach dem Einprägen der Sicke einer weiteren, eine Erhöhung der Festigkeit des Stahls bewirkenden Wärmebehandlung unterzogen wird.

Gegenüber dem sich aus der DE-10 2007 061 084-A1 ergebenden Verfahren bietet das erfindungsgemäße Verfahren den Vorteil, dass, anders als bei der Umwandlung von Austenit in Bainit in einem Salzwarmbad oder Metallbad das sich als Verfahrensergebnis ergebende Blech keiner mit nachteiligen Folgen verbundenen mechanischen Reinigung unterzogen werden muss, wenn das erfindungsgemäße Verfahren unter Schutzgas durchgeführt wird, und im Vergleich zu dem sich aus der DE-101 56 603-A1 ergebenden Verfahren stellt das erfindungsgemäße Verfahren einen einfacheren, deshalb schnelleren und billigeren Prozess dar, da das erfindungsgemäße Verfahren keinen Verfahrensschritt benötigt, welcher mit dem Schritt des Anlassens des bekannten Verfahrens vergleichbar wäre.

Bei dem erfindungsgemäßen Verfahren wird die der Perlitbildung dienende Wärmebehandlung vorzugsweise in einer Schutzgasatmosphäre durchgeführt, damit die Blechoberfläche anschließend nicht mechanisch gereinigt werden muss.

Damit das zur Perlitbildung wärmebehandelte, in Bandform vorliegende Stahlblech eine gute Oberflächenqualität aufweist, muss entweder dafür gesorgt werden, dass die Walzen, mit deren Hilfe das Blechband durch die der Wärmebehandlung dienende Anlage hindurchgezogen wird, glatte Mantelflächen aufweisen, oder wird das Blech - und dies stellt eine äußerst vorteilhafte Option dar - nach der der Perlitbildung dienenden Wärmebehandlung zur Erhöhung der Zugfestigkeit unter Dickenreduzierung um mindestens ungefähr 40 % kaltumgeformt, wobei Ziehriefen und/oder andere Oberflächendefekte des Blechs eingeebnet und dadurch beseitigt werden. Vorteilhaft ist es, wenn die Dickenreduzierung am Blechband vorgenommen wird, d.h. das Kaltumformen durch Walzen erfolgt; die Qualität der hierfür üblicherweise verwendeten Walzen und Walzgerüste garantiert glatte Oberflächen des kaltumgeformten Blechbandes - typischerweise wird die Blechdicke dabei von ca. 0,50 mm auf ca. 0,20 mm reduziert. In diesem Zusammenhang sei darauf hingewiesen, dass sich bei einem Kohlenstoffstahl mit einem überwiegend perlitischen Gefüge, nicht aber bei einem Stahl mit überwiegend bainitischem Gefüge, die Zugfestigkeit durch Kaltumformen beträchtlich erhöhen lässt.

Bei bevorzugten Ausführungsformen des erfindungsgemäßen Verfahrens wird als Ausgangsmaterial ein weichgeglühter Stahl mit kugelig eingeformtem Zementit verwendet, wobei der Zementit im Vergleich mit einem homogenen Martensitgefüge dazu führt, dass dichtungsrelevante Strukturen der Funktionslage im Betrieb noch weniger zum Setzen neigen. Damit der im Ausgangsmaterial vorhandene kugelig eingeformte Zementit noch in ausreichendem Umfang erhalten bleibt, wird das erfindungsgemäße Verfahren zweckmäßigerweise so gestaltet, dass der Stahl während des im Zuge der Wärmebehandlung erfolgenden Glühens zwecks nur teilweiser Auflösung des Zementits für eine hierfür geeignete Zeitdauer auf der Glühtemperatur gehalten wird. Der Austenitisierungsprozess wird hierzu zweckmäßigerweise rechtzeitig vor der vollständigen Auflösung des kugeligen Zementits abgebrochen.

Da es sich empfiehlt, eine erfindungsgemäße Funktionslage nach dem Einprägen dichtungsrelevanter Strukturen, wie Sicken, einer weiteren, eine Erhöhung der Festigkeit des Stahls bewirkenden Wärmebehandlung zu unterziehen, wird das Blech hierfür vorzugsweise auf eine Temperatur von mindestens 150°C und besonders bevorzugt auf eine Temperatur von mindestens 200°C erwärmt; es empfiehlt sich, diese Temperatur über eine Zeitdauer von mindestens einer halben Stunde zu halten. Andererseits sollte während der gesamten weiteren Wärmebehandlung die Temperatur unterhalb der Anlasstemperatur des Stahls liegen.

Weitere Merkmale, Vorteile und Einzelheiten der Erfindung ergeben sich aus der nachfolgenden Beschreibung besonders vorteilhafter Ausführungsformen sowie den beigefügten Zeichnungen.

Wie bereits erwähnt, werden Federstähle gemäß der europäischen Norm EN 10132-4 bevorzugt; hierunter fallen die besonders vorteilhaften Stähle mit den Kurzbezeichnungen C85S und C100S, für die im Folgenden Ausführungsformen des erfindungsgemäßen Verfahrens beschrieben werden sollen, welche zu besonders günstigen Materialeigenschaften führen.

Das weichgeglühte Ausgangsmaterial mit kugelig eingeformtem Zementit wird zur Erzeugung eines überwiegend perlitischen Gefüges und unter Beibehaltung eines ausreichenden Anteils von kugeligem Zementit einer Wärmebehandlung unterzogen, bei der der Stahl zur Austenitisierung zunächst bei mindestens ca. 750°C und vorzugsweise bei ca. 850°c geglüht wird; danach wird der Bereich der Perlitbildung durchlaufen, indem mit ca. 30°K/sec auf 500°C bis 570°C abgekühlt wird. Die anschließende weitere Abkühlung kann in beliebiger Weise erfolgen. Das Glühen und Abkühlen erfolgt in einer Schutzgasatmosphäre, d.h. unter Inertgas. Diese Verfahrensschritte lassen sich kostengünstig mit einem Bandmaterial als Ausgangsmaterial durchführen.

Bei einer Variante des vorstehend beschriebenen Verfahrens wird der Stahl nach dem Glühen in weniger als 1 sec., insbesondere in ca. 0,6 sec. auf ungefähr 500°C bis 570°C abgekühlt und sodann während ca. 10 sec. auf dieser Temperatur gehalten, worauf der Stahl in beliebiger Weise weiter abgekühlt werden kann. Diese Verfahrensführung eignet sich besonders für einen Stückgutprozess, bei dem nicht Bandmaterial, sondern bereits ausgestanzte Funktionslagen wärmebehandelt werden.

Anschließend erfolgt die bereits beschriebene Kaltumformung des Stahls, bei der die Materialdicke des Blechs insbesondere um ca. 50% bis ca. 60% reduziert wird. Dadurch ergibt sich eine Zugfestigkeit (Rₘ) von ungefähr 1.700 N/mm² und eine Bruchdehnung (A₈₀ₘₘ) von ungefähr 6%.

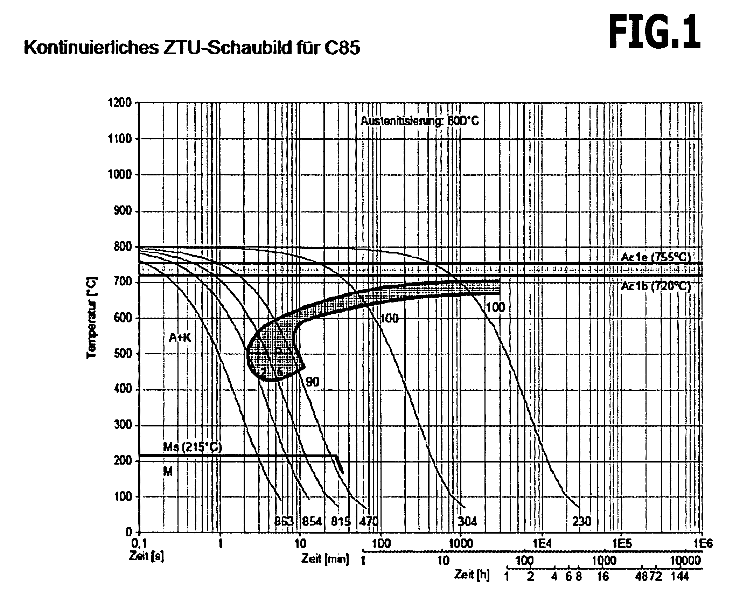

Bei der Festlegung von Wärmebehandlungen von Stählen arbeitet der Fachmann mit dem für jede Stahlsorte verfügbaren kontinuierlichen Zeit-Temperatur-Umwandlung-Schaubild (kurz ZTU-Schaubild genannt), und die beigefügte Figur 1 zeigt das ZTU-Schaubild für den Stahl C85, bei dem es sich um einen für die Erfindung bevorzugten Stahl handelt.

Bei den sechs, links im Schaubild im Bereich zwischen 755°C und 800°C beginnenden und über der Zeitskala mit 863, 854 , 815, 470, 304 und 230 bezeichneten Kurven handelt es sich um Beispiele für den Temperaturverlauf bei der der Gefügeumwandlung dienenden Wärmebehandlung; die Zahlen 863, 584, 815, 470, 304 und 230 an den unteren Enden dieser Kurven geben den jeweiligen durch die Wärmebehandlung erzielte Härtewert in HV an. Zunächst wird der Stahl durch Erhitzen austenitisiert - die in das Schaubild eingezeichnete und bei 720°C verlaufende untere horizontale Linie definiert den Beginn der Austenitbildung, während die obere, bei 755°C verlaufende horizontale Linie die vollständige Umwandlung in Austenit definiert. Bei der darauf folgenden Wärmebehandlung mit einem Temperatur-Zeit-Verlauf beispielsweise gemäß einer der sechs vorstehend erwähnten Kurven lässt sich der Karbidanteil des Stahls über die Haltezeit der Glühtemperatur (Länge des ungefähr horizontal verlaufenden Kurvenbereichs) einstellen - je länger die Haltezeit, umso mehr werden die Karbide im Stahl gelöst. In dem ZTU-Schaubild ist das Gebiet der Perlitbildung eingegrenzt und mit P bezeichnet; bei einer Temperaturführung längs einer der fünf, den Härtewerten 584, 815, 470, 304 und 230 zugeordneten Kurven ergibt sich ein Perlitanteil von 2% bzw. 6% bzw. 90% bzw. 100%. Schließlich ist in das ZTU-Schaubild noch eine im Wesentlichen bei 215°C, d.h. im Wesentlichen horizontal verlaufende Linie eingezeichnet, welche die sogenannte Martensit-Starttemperatur (215°C) markiert; unterhalb dieser Linie wandelt sich Austenit in Martensit um.

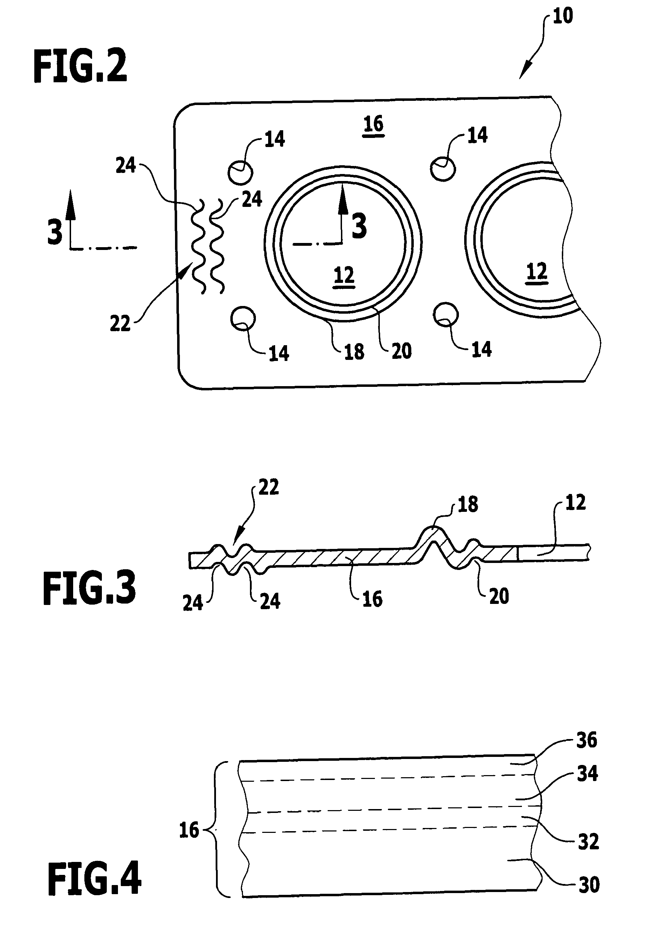

Die Fig. 2 zeigt eine Draufsicht auf einen Teil einer einlagigen Zylinderkopfdichtung 10 mit Brennraumöffnungen 12 und Schraubenlöchern 14 für den Durchtritt von Zylinderkopfschrauben. Die einlagige Dichtungsplatte dieser Zylinderkopfdichtung wurde als Ganzes mit 16 bezeichnet. Der Einfachheit halber wurden weitere Öffnungen der Dichtungsplatte, wie Kühlmittel- und Öl-Durchtrittsöffnungen in Fig. 2 weggelassen.

Die Fig. 3 zeigt einen Schnitt nach der Linie 3-3 in Fig. 2. Die Dichtungsplatte 16 wird zumindest im Wesentlichen von einer erfindungsgemäßen Federstahlblech-Funktionslage gebildet, sie kann aber ein- oder beidseitig mit einer der Mikroabdichtung dienenden Beschichtung, z.B. aus einem elastomeren Material, versehen sein. Wie die Fig. 2 und 3 erkennen lassen, werden die Brennraumöffnungen 12 von in die Dichtungsplatte 16 eingeprägten kreisringförmigen Sicken umgeben, nämlich von einer Abdichtsicke 18 und einer dieser benach-barten Sicke 20, deren Höhe und Breite geringer sind als die Höhe und Breite der Abdichtsicke 18, so dass die Sicke 20 in Richtung senkrecht zur Dichtungs-platte 16 steifer ist als die Abdichtsicke 18 und infolgedessen eine sogenannte Stoppersicke bilden kann, durch welche übermäßige Abflachungen der Abdichtsicke 18 bei eingebauter Zylinderkopfdichtung und im Motorbetrieb verhindert werden. Im Bereich ihrer Längsenden, von denen die Fig. 2 und 3 nur das eine zeigen, ist die Dichtungsplatte 16 jeweils mit einer Abstützvorrichtung 22 versehen, durch die verhindert werden soll, dass der Zylinderkopf im Bereich seiner Längsenden beim Anziehen der Zylinderkopfschrauben so weit nach unten, d.h. in Richtung auf einen Motorblock, gezogen wird, dass die der Zylinderkopfdichtung 10 zugewandte Dichtfläche des Zylinderkopfs eine Wölbung aufweist. Bei der in den Fig. 2 und 3 dargestellten Ausführungs-form wird die Abstützvorrichtung 22 von zwei in die Dichtungsplatte 16 eingeprägten Abstützsicken 24 gebildet, welche in einer Draufsicht auf die Dichtungsplatte 16 einen mäanderförmigen Verlauf aufweisen, für die im Übrigen jedoch dasselbe gilt wie für die Stoppersicke 20, d.h. die Abstützsicken 24 sind niederer sowie schmäler und damit steifer als die Abdichtsicke 18.

Die Fig. 4 stellt einen kleinen und stark vergrößerten Ausschnitt aus Fig. 3 dar und zeigt als Substrat eine Federstahl-Blechlage 30, für die als Ausgangs- oder Vormaterial eine Stahlblechlage einer erfindungsgemäßen Funktionslage verwendet wurde, auf deren gemäß Fig. 4 obere Seite einen dünne Zinkschicht mit einer Dicke von beispielsweise nur 2 bis 3 µm galvanisch oder unter Verwendung eines Organozink-Precursors im CVD-Verfahren aufgebracht wurde.

Bei der Durchführung dieses Beschichtungsverfahrens geht aufgrund von Diffusionsvorgängen diese Zinkschicht einerseits in eine ZnFe-Diffusionsschicht 32 über und bildet andererseits mit einer unter Verwendung eines Organoaluminium-Precursors im CVD-Verfahren aufgebrachten Aluminiumschicht eine ZnAl-Diffusionsschicht 34, an die eine Aluminiumschicht 36 angrenzt, welche aus reinem Aluminium bestehen, aber auch einen geringen Magnesiumanteil enthalten kann.

Wie bereits erwähnt, kann es außerordentlich vorteilhaft sein, für einen Korrosionsschutz die erfindungsgemäße Funktionslage mit einer Phosphatschicht zu versehen. Hierzu empfehlen sich insbesondere die folgenden Vorgehensweisen:

Das Stahlblech wird in einem phosphorsauren Behandlungsbad gebeizt, wodurch die Blechoberfläche von Rost, Zunder und anderen Verunreinigungen befreit wird und sich eine gute Haftung der dabei gebildeten Konversionsschicht ergibt, bei der es sich um eine amorphe und/oder nanokristalline Schicht aus Eisenphosphat und Eisenoxid bzw. -hydroxid handelt. Dieses Verfahren ist unter der Bezeichnung Alkaliphosphatierung (wegen der Zugabe von Alkalidihydrogenphophaten zur pH-Einstellung) oder Eisenphosphatierung bekannt und dient einem einfachen bis relativ guten Korrosionsschutz. Das beschriebene Verfahren ist jedoch ein verhältnismäßig langsames Verfahren und erfordert relativ hohe Prozesstemperaturen; durch die Zugabe von Oxidationsmitteln kann der Prozess wesentlich beschleunigt werden, insbesondere durch die Zugabe von Chloraten, Bromaten, Nitraten, Nitriten, Peroxiden und organischen Nitroverbindungen.

Alternativ kann das Blech in einem alkalischen Bad gereinigt und dann einem schichtbildenden Phosphatierverfahren unterworfen werden, insbesondere einer Zinkphosphatierung, wobei schwerlösliche Phosphate gebildet werden. Vorzugsweise wird dabei eine Zinkphosphatierlösung verwendet, welche als Hauptbestandteile primäres Zinkphosphat, Phosphorsäure und wenigstens einen Reaktionsbeschleuniger enthält. Besonders empfehlenswert ist eine Bikationenphosphatierung (Zink-Calcium-Phosphatierung) oder eine Trikationenphosphatierung (Zink-Nickel-Mangan-Phosphatierung) - bei letzterer wird vorzugsweise Phosphophyllit gebildet. Als Reaktionsbeschleuniger werden Nitrit, Nitrat, Chlorat, m-Nitro-Benzolsulfonat, Peroxid, aber auch Hydroxilamin und Nitroguanidin zugesetzt. Durch die Zugabe derartiger Oxidationsmittel kann der Prozess wesentlich beschleunigt werden. Bei einer Zinkphophatierung bildet sich eine kristalline Zinkphosphatschicht; damit die Kristalle auf dem Blech aufwachsen, ist für die Ausbildung kleiner Kristalle eine Keimbildung wesentlich, und da eine spontane Keimbildung oft zu langsam und ungleichmäßig erfolgt, ist es vorteilhaft, das Blech mit einer Suspension nanokristalliner Titankolloide vorzuspülen, um auf das Blech Wachstumskeime aufzubringen. Hierdurch entstehen feine Zinkphosphatkristalle mit einer Kantenlänge von 5 bis 15 µm.

Es empfiehlt sich schließlich eine Nachbehandlung der Phosphatschicht mit einer Cr₃-haltigen Passivierungsflüssigkeit, wodurch die Phosphatschicht versiegelt wird, indem offene Poren in der Phosphatschicht geschlossen werden, was zu einem noch weiter verbesserten Korrosionsschutz sowie zu einer noch besseren Haftung von auf der Phosphatschicht gegebenenfalls angebrachten Beschichtungen führt.

Bevorzugte Ausführungsformen der erfindungsgemäßen Funktionslage weisen die folgenden Merkmale einzeln oder in Kombination auf:

Der Stahl hat einen Cr-Gehalt von höchstens 1,6 Gew.%.

Der Stahl weist einen Ni-Gehalt von höchstens 2,1 Gew.% auf.

Das Stahlblech ist im Bereich der Korrosionsschutz-Beschichtung verzinkt, wobei die Korrosionsschutz-Beschichtung insbesondere eine an die verzinkte Blechlage angrenzende ZnAl-Diffusionsschicht und/oder eine an die Blechlage angrenzende ZnFe-Diffusionsschicht aufweist. Das Stahlblech kann im Bereich der Korrosionsschutz-Beschichtung aber auch eine Phosphatschicht aufweisen.

Die Blechplatte ist mit mindestens einer in das Blech eingeprägten Sicke versehen, bei der es sich insbesondere um eine höhenelastisch verformbare Abdichtsicke handelt.

Besonders vorteilhafte Ausführungsformen des erfindungsgemäßen Verfahrens zur Herstellung der Funktionslage weisen die folgenden Merkmale einzeln oder in Kombination auf:

Wurde der Stahl zur Erzeugung eines überwiegend perlitischen Gefüges wärmebehandelt und sodann zur Erhöhung der Zugfestigkeit kaltumgeformt, wird das Kaltumformen durch den Vorgang des Walzens bewirkt.

Wird das Blech nach dem Einprägen einer Sicke einer weiteren, eine Erhöhung der Festigkeit des Stahls bewirkenden Wärmebehandlung unterzogen, wird das Blech während dieser weiteren Wärmebehandlung auf eine Temperatur von mindestens 150 °C erwärmt.

Während der weiteren Wärmebehandlung wird das Blech vorzugsweise über eine Zeitdauer von mindestens einer halben Stunde erwärmt.

Schließlich empfiehlt es sich, das Blech während der weiteren Wärmebehandlung auf eine Temperatur zu erwärmen, welche während der gesamten weiteren Wärmebehandlung unterhalb der Anlasstemperatur des Stahls liegt.

## Patentansprüche

1. Zylinderkopfdichtung mit mindestens einer Federstahlblech-Funktionslage, welche mindestens eine geprägte Abdichtsicke aufweist und deren Stahl ein niederlegierter Stahl ist und einen C-Gehalt von mindestens 0,4 Gew.%, ein Gefüge mit einem Anteil von mindestens 50 % Perlit, eine Zugfestigkeit (Rₘ) von mehr als 1.100 N/mm² sowie eine Bruchdehnung (A₈₀ₘₘ) bei einer Anfangsmesslänge von 80 mm von mehr als 2 % aufweist.

2. Zylinderkopfdichtung nach Anspruch 1, wobei der Stahl Nickel enthält und der Ni-Gehalt höchstens 2,1 Gew.% beträgt.

3. Zylinderkopfdichtung nach Anspruch 1, wobei der Perlit mindestens im Wesentlichen ein sorbitisches Gefüge aufweist.

4. Zylinderkopfdichtung nach einem der Ansprüche 1 bis 3, wobei in das Gefüge kugeliger Zementit eingebettet ist.

5. Zylinderkopfdichtung nach einem der Ansprüche 1 bis 4, wobei das Blech der Funktionslage ein unter Dickenreduzierung um mindestens ungefähr 40%, insbesondere um mindestens 50% kaltumgeformtes Blech mit einer Zugfestigkeit (Rₘ) von mindestens 1.500 N/mm² und insbesondere von mindestens 1.700 N/mm² ist.

6. Zylinderkopfdichtung nach einem der Ansprüche 1 bis 5, wobei der Stahl einen Cr-Gehalt von höchstens 1,6 Gew.% aufweist.

7. Zylinderkopfdichtung nach einem der Ansprüche 1 bis 6, wobei die Funktionslage mindestens in einem Bereich ihrer einen Hauptoberfläche eine Korrosionsschutz-Beschichtung aufweist.

8. Zylinderkopfdichtung nach Anspruch 7, wobei das Blech der Funktionslage mindestens in einem Bereich seiner einen Hauptoberfläche verzinkt ist und eine an die Zinkschicht angrenzende ZnAl-Diffusionsschicht aufweist.

9. Zylinderkopfdichtung nach Anspruch 7 oder 8, wobei das Blech der Funktionslage mindestens in einem Bereich seiner einen Hauptoberfläche eine an das Blech angrenzende ZnFe-Diffusionsschicht aufweist.

10. Zylinderkopfdichtung nach einem der Ansprüche 1 bis 9, wobei die chemische Zusammensetzung des Stahls derjenigen eines Stahls gemäß der Europäischen Norm EN 10132-4 entspricht.

11. Blechplatte nach einem der Ansprüche 1 bis 10, wobei der Stahl ein Gefüge mit einem Anteil von mindestens 70 % Perlit aufweist.

12. Verfahren zur Herstellung einer Zylinderkopfdichtungsfunktionslage aus einem Stahlblech, dessen Stahl ein niederlegierter Stahl ist und einen C-Gehalt von mindestens 0,4 Gew.% aufweist, wobei als Ausgangsmaterial ein in Blechform vorliegender weichgeglühter Stahl verwendet und dieser einer solchen Wärmebehandlung unterzogen wird, dass der Stahl ein Gefüge aufweist, in welchem das Flächenverhältnis von perlitischem zu nicht-perlitischem Gefüge mehr als 0,5 beträgt, und wobei das Blech nach dem Einprägen der Sicke einer weiteren, eine Erhöhung der Festigkeit des Stahls bewirkenden Wärmebehandlung unterzogen wird.

13. Verfahren nach Anspruch 12, wobei das Blech nach der Wärmebehandlung zur Erhöhung der Zugfestigkeit unter Dickenreduzierung um mindestens ungefähr 40% kaltumgeformt wird.

14. Verfahren nach Anspruch 13, wobei das Blech um ca. 50% bis ca. 60% kaltumgeformt und dadurch eine Zugfestigkeit (Rₘ) von mindestens ungefähr 1.600 N/mm² und höchstens ungefähr 1800 N/mm² und eine Bruchdehnung (A₈₀ₘₘ) von mindestens 3% erzielt wird.

15. Verfahren nach einem der Ansprüche 12 bis 14, wobei als Ausgangsmaterial ein Stahl mit kugelig eingeformtem Zementit verwendet wird.

16. Verfahren nach Anspruch 15, wobei der Stahl während des im Zuge der Wärmebehandlung erfolgenden Glühens für eine nur teilweise Auflösung des Zementits nur während einer hierfür ausreichenden Zeit auf der Glühtemperatur gehalten wird.

## Claims

1. A cylinder head gasket having at least one functional layer of sheet spring steel, which has at least one stamped sealing bead and whereof the steel is a low-alloy steel and has a C content of at least 0.4 weight %, a microstructure having a pearlite content of at least 50%, a tensile strength (Rₘ) of more than 1 100 N/mm² and an elongation at break (A₈₀ₘₘ), with an initial measured length of 80 mm, of more than 2%.

2. A cylinder head gasket according to Claim 1, in which the steel contains nickel and the Ni content is at most 2.1 weight %.

3. A cylinder head gasket according to Claim 1, in which the pearlite has an at least substantially sorbitic microstructure.

4. A cylinder head gasket according to one of Claims 1 to 3, in which spherical cementite is embedded in the microstructure.

5. A cylinder head gasket according to one of Claims 1 to 4, in which the sheet metal of the functional layer is a sheet metal that is cold formed with thickness reduction by at least approximately 40%, in particular by at least 50%, having a tensile strength (Rₘ) of at least 1 500 N/mm² and in particular of at least 1 700 N/mm².

6. A cylinder head gasket according to one of Claims 1 to 5, in which the steel has a Cr content of at most 1.6 weight %.

7. A cylinder head gasket according to one of Claims 1 to 6, in which the functional layer has an anti-corrosion coating, at least in a region of its one major surface.

8. A cylinder head gasket according to Claim 7, in which the sheet metal of the functional layer is zinc-coated, at least in a region of its one major surface, and has a ZnAl diffusion layer adjoining the zinc layer.

9. A cylinder head gasket according to Claim 7 or 8, in which the sheet metal of the functional layer has a ZnFe diffusion layer adjoining the sheet metal, at least in a region of its one major surface.

10. A cylinder head gasket according to one of Claims 1 to 9, in which the chemical composition of the steel corresponds to that of a steel conforming to European standard EN 10132-4.

11. A sheet metal panel according to one of Claims 1 to 10, in which the steel has a microstructure having a pearlite content of at least 70%.

12. A method for making a cylinder head gasket functional layer from a steel sheet, whereof the steel is a low-alloy steel and has a C content of at least 0.4 weight %, in which there is used as the starting material a soft-annealed steel in sheet form, and this steel undergoes a heat treatment such that the steel has a microstructure in which the surface ratio of pearlitic to non-pearlitic microstructure is more than 0.5, and in which, after stamping of the bead, the sheet undergoes a further heat treatment that has the effect of increasing the strength of the steel.

13. A method according to Claim 12, in which after the heat treatment the sheet is cold formed for the purpose of increasing the tensile strength with a thickness reduction by at least approximately 40%.

14. A method according to Claim 13, in which the sheet is cold formed by approx. 50% to approx. 60% and a tensile strength (Rₘ) of at least approximately 1 600 N/mm² and at most approximately 1 800 N/mm² and an elongation at break (A₈₀ₘₘ) of at least 3% are thereby achieved.

15. A method according to one of Claims 12 to 14, in which there is used as the starting material a steel having spherical cementite formed therein.

16. A method according to Claim 15, in which, during the annealing that takes place in the course of the heat treatment, for the purpose of only partial breaking up of the cementite the steel is kept at annealing temperature only for the time sufficient therefor.

## Revendications

1. Joint de culasse comprenant une couche fonctionnelle en tôle d'acier à ressort, lequel présente au moins une moulure d'étanchéité gaufrée et dont l'acier est un acier faiblement allié et qui présente une teneur en C d'au moins 0,4 % en poids, une structure comprenant une proportion d'au moins 50 % de perlite, une résistance à la traction (Rₘ) supérieure à 1 100 N/mm² ainsi qu'un allongement à la rupture (A₈₀ₘₘ), pour une longueur mesurée de départ de 80 mm, supérieur à 2 %.

2. Joint de culasse selon la revendication 1, l'acier contenant du nickel et la teneur en Ni ayant une valeur de 2,1 % en poids au maximum.

3. Joint de culasse selon la revendication 1, la perlite présentant au moins essentiellement une structure à base de sorbitol.

4. Joint de culasse selon l'une quelconque des revendications 1 à 3, de la cémentite sphéroïdale étant incorporée dans la structure.

5. Joint de culasse selon l'une quelconque des revendications 1 à 4, la tôle de la couche fonctionnelle étant une tôle formée à froid moyennant une réduction d'épaisseur d'au moins approximativement 40 %, en particulier d'au moins 50 %, présentant une résistance à la traction (Rₘ) d'au moins 1 500 N/mm² et en particulier d'au moins 1 700 N/mm².

6. Joint de culasse selon l'une quelconque des revendications 1 à 5, l'acier présentant une teneur en Cr de 1,6 % en poids au maximum.

7. Joint de culasse selon l'une quelconque des revendications 1 à 6, la couche fonctionnelle présentant, au moins dans une zone de l'une de ses surfaces principales, un revêtement de protection contre la corrosion.

8. Joint de culasse selon la revendication 7, la tôle de la couche fonctionnelle étant galvanisée au moins dans une zone de l'une de ses surfaces principales et présentant une couche de diffusion de ZnAl adjacente à la couche de zinc.

9. Joint de culasse selon la revendication 7 ou 8, la tôle de la couche fonctionnelle présentant, au moins dans une zone de l'une de ses surfaces principales, une couche de diffusion de ZnFe adjacente à la tôle.

10. Joint de culasse selon l'une quelconque des revendications 1 à 9, la composition chimique de l'acier correspondant à celle d'un acier selon la norme européenne EN 10132-4.

11. Plaque de tôle selon l'une quelconque des revendications 1 à 10, l'acier présentant une structure comprenant une proportion d'au moins 70 % de perlite.

12. Procédé servant à fabriquer une couche fonctionnelle de joint de culasse à partir d'une tôle d'acier, dont l'acier est un acier faiblement allié et présente une teneur en C d'au moins 0,4 % en poids, un acier ayant subi un recuit d'adoucissement, se présentant sous la forme d'une tôle étant utilisé en tant que matériau de départ et ce dernier étant soumis à un traitement thermique tel que l'acier présente une structure, dans laquelle le rapport surfacique entre la structure à base de perlite et la structure sans perlite présente une valeur supérieure à 0,5, et la tôle étant soumise, après que la moulure a été pratiquée par gaufrage, à un autre traitement thermique entraînant une amélioration de la résistance de l'acier.

13. Procédé selon la revendication 12, la tôle étant formée à froid moyennant une réduction d'épaisseur d'au moins approximativement 40 % après le traitement thermique servant à améliorer la résistance à la traction.

14. Procédé selon la revendication 13, la tôle étant formée à froid sur environ 50 % à 60 %, ce qui permet d'atteindre une résistance à la traction (Rₘ) d'au moins approximativement 1 600 N/mm² et au maximum d'approximativement 1 800 N/mm² et un allongement à la rupture (A₈₀ₘₘ) d'au moins 3 %.

15. Procédé selon l'une quelconque des revendications 12 à 14, un acier comprenant de la cémentite intégrée sous une forme sphéroïdale étant utilisé en tant que matériau de départ.

16. Procédé selon la revendication 15, l'acier étant maintenu, au cours du recuit ayant lieu dans le cadre du traitement thermique, en vue d'une dissolution uniquement partielle de la cémentite, uniquement pendant une durée suffisante à cet effet, à la température de recuit.
